# EUROPEAN PATENT APPLICATION

(11) **EP 4 718 392 A1**
(43) Date of publication of application: **01.04.2026**
(21) Application number: 24203019.5
(22) Date of filing: 26.09.2024
(51) Int. Cl.: G06V 20/40, G06V 20/52

(54) **METHOD AND SYSTEM FOR DETECTING OBJECT ON COMPONENTS**

(71) Applicant: Westinghouse Electric Sweden AB, 721 63 Västerås (SE)
(72) Inventor: ANDERSSON, Björn, 723 50 Västerås (SE); ANGLAND, Erik, 72231 Västerås (SE); HAMMARSTRÖM, Johan, 72597 Västerås (SE); WILLMAN, Christofer, 75591 Uppsala (SE)
(74) Representative: Bjerkén Hynell KB

(57) **Abstract**

The present application relates to a method for detecting classified objects on components in nuclear power plants, the method comprising the steps of: retrieving at least one video stream of frames containing images of a component, which at least one video stream is uncompressed and unaltered; analysing each frame of the retrieved at least one video stream with an image model built up of at least one type of classified object; marking in the at least one video stream all detected objects; and presenting the marked objects in a video stream or as a summary.

## Description

### TECHNICAL AREA

The present application relates to a method and a system for detecting objects on components and in particular components that are used in nuclear power plants.

### BACKGROUND OF INVENTION

In nuclear power plants, visual inspections of for example irradiated fuel are performed on a regular basis. The inspection is performed by video cameras that provide video streams of images of for example a fuel assembly inside a nuclear reactor. Types of flaws or defects on the fuel assembly can for example be debris, corrosion, defect tabs or oxide flaking.

The video images are evaluated by trained, qualified and experienced inspectors that review an inspection stream live on-site. There is however always a risk that a flaw or defect is missed by the inspector during inspection.

Other types of objects that also require inspection in nuclear plants are control rods, fuel channels, debris filters and other components in a reactor such as pipes and fittings. Normally inspection of these types of objects are performed by inspectors with visual inspection in the fuel and service pools of the nuclear plant.

The above mentioned visual inspections can be time-consuming with a risk that flaws or defects are missed even by qualified and experienced inspectors. There is thus a need for increased safety regarding the inspections as well as a need or desire for reduced inspection time.

One approach is disclosed in CN 114140419, in which a method is described for automatically identifying apparent defects on a nuclear fuel assembly by visual inspection with video cameras. The videos from the cameras are pre-processed in order to overcome factors of interference detection, such as unclear videos, lost frames, low visual observation efficiency, low identification degree and the like caused by water flow disturbance. The use of pre-processing of images has the drawback of causing a lag or delay as well as requiring increased computer performance.

### BRIEF DESCRIPTION OF INVENTION

The aim of the present application is to remedy the drawbacks with the state of the art technology. This aim is solved with the features of the independent patent claims. Preferable embodiments form the subject of the dependent patent claims.

According to one aspect, a method for detecting classified objects on components in nuclear power plants is provided. The method may comprise the steps of retrieving at least one video stream of frames containing images of a component, which at least one video stream is uncompressed and unaltered, analysing each frame of the retrieved at least one video stream with an image model built up of and trained on at least one type of classified object, marking in the at least one video stream all detected objects, and presenting the marked objects in a video stream or as a summary.

The advantage is that the image model directly uses video image signals, wherein there is no manipulation, treatment or alteration of the frames of the video stream, which otherwise may lead to significant delays and/or require high computing power since it will be more processor intensive. Further, with this solution it is possible to obtain a video stream with marked objects.

According one feature, the image model may be built up of plurality of components, the plurality of components being of both the same type and of different types. Thus, the model is then capable of detecting several different objects during a single inspection.

As a way of estimating which confidence an object is considered to be a detectable object, a confidence level is set for each detected component.

In order to extract relevant information from the inspection and to reduce the amount of image data, each frame comprising a detected and marked object may be collected, and then the collected frames may be presented as a seamless video stream or as a summary with images with all objects found in the retrieved video stream.

Further, in order to provide information regarding the detected objects, the marked objects may be labelled with information regarding the type of object, and the detected objects may be presented with label and confidence level.

Even if the model may be capable of detecting several different objects, which type of detected object to be presented in the video stream or the summary may be selected.

Since the same detected object may appear in several video frames, each detected object may be tracked in order to prevent duplication of detection when a certain object appears in more than one video frame.

Preferably, the image model is built up by training detection of known objects. In that regard, the model may utilize object detection technology. The model may also utilize image segmentation technology or utilize a combination of both technologies.

The method may be applied to different types of components in a nuclear power plant, wherein the components to be inspected may comprise, fuel assemblies, filters, control rods, piping.

According to a further aspect, a computer platform may be provided, comprising program instructions which, when the program is executed by the computer platform, causes the computer platform to carry out the method. Also, a computer-readable storage medium may be provided, comprising program instructions which, when executed by a computer platform, cause the computer platform to carry out the method

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 is a schematic side view of a fuel assembly that may be a component to be inspected by the present method, and
Fig. 2 is a flow chart comprising method steps.

### DETAILED DESCRIPTION OF THE INVENTION

A method for detecting object on components in nuclear power plants has been developed. One area the requires regular visual inspection is the irradiated fuel in the nuclear reactor.

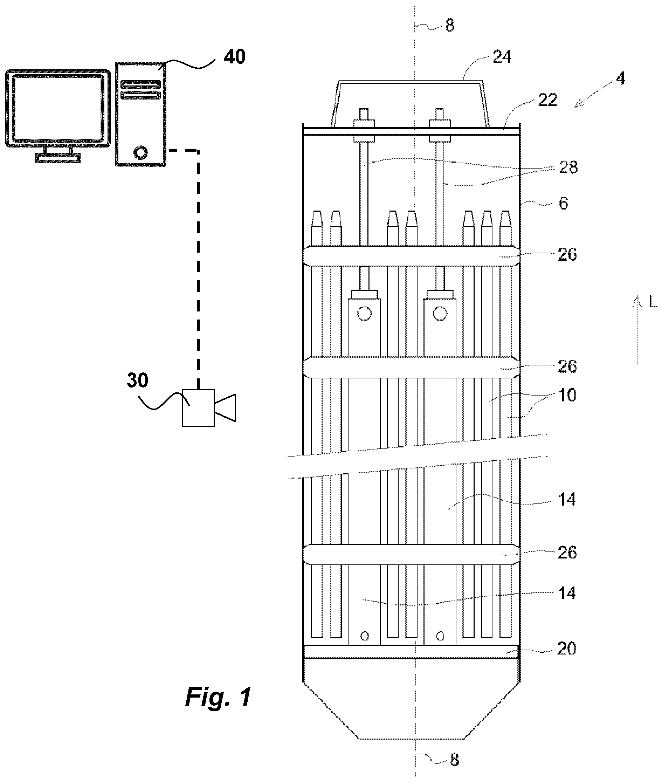

Fig. 1 shows schematically a side view of a fuel assembly 4 as a non-limiting example of a component that may be inspected by the method. The fuel assembly 4 comprises a number of fuel rods 10 and water channels 14. A lower tie plate 20 is arranged below the fuel rods 10. A lower end of the water rods 14 is attached to the tie plate 20. Above the fuel rods 10 an upper lifting device 22 is arranged. The upper lifting device 22 has a handle 24 for gripping and lifting a bundle of fuel rods 10.

The fuel rods 10 are held by a plurality of spacer grids 26. It should be noted that Fig. 1 schematically shows only an upper and lower part of the fuel assembly 4. The fuel assembly 4 comprises a number of spacer grids 26. The fuel assembly 4 also comprises attachment rods 28, which at a lower end are attached to the upper part of the water channels 14 and which at an upper end are attached to the upper lifting device 22. All spacer grids 26, are attached to the water channels 14. The upper spacer grid 26 is positioned at the level of the attachment rods 28. The whole bundle of fuel rods 10 is thus held together with the help of the water channels 14, lower tie plate 20, attachment rods 28, upper lifting device 22 and spacer grids 26. It is therefore possible to lift the whole bundle of fuel rods 10 by gripping and lifting at the handle 24.

During operation of the fuel assembly, it could be subjected to different wear and defects such as debris getting caught on different parts of the assembly, corrosion on various places on the assembly, mechanical deformation of the spacers and oxide flaking. In the following these will be defined as objects. It is to be understood that the above mentioned objects are not exhaustive and that other types of objects within the scope of the application are also comprised.

Conventionally, inspection of the fuel assembly for detecting and marking of objects is performed by using irradiation proof video cameras 30 that are situated in the reactor fuel pool adjacent the nuclear fuel assembly 4. More than one video camera 30 may be used, for example four cameras may be used, one on each side of the fuel assembly. Suitable attachment arrangements may be used for the video cameras, enabling visual coverage of the whole fuel assembly. Video streams with a plurality of video frames are obtained from the one or more video cameras and are stored and/or presented to qualified and experienced inspectors for the detection of objects on the fuel assembly. In order to reduce the risk that an inspector misses an object and as an extra "safety layer", the method has been developed.

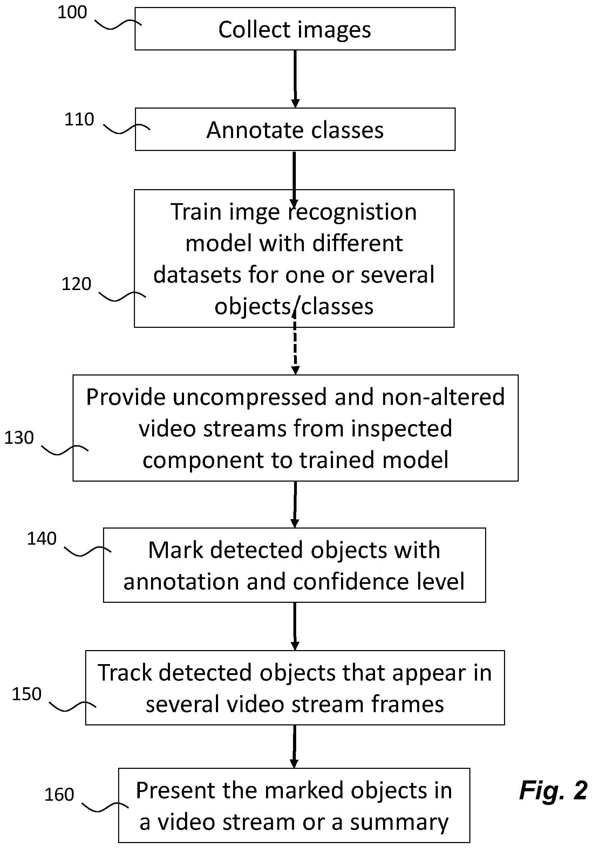

As a first step 100, Fig. 2, a large number of images of known existing objects are collected. These images may be retrieved beforehand from previous inspections and are stored in a database. The images may be uploaded to datasets and are annotated with the type of object, step 110. An image recognition model is use or created. The model is trained to identify objects by using the annotated datasets, step 120. In this regard, various image and data formats for annotation, training and inference may be supported. Further, depending on the actual application of the method regarding inspection, the model may be trained on one type of object, but may also be trained on several different types of objects. Further, different datasets may be used. One dataset may be used for the training of the model and another dataset may be used for validating the model during training. In this regard, each dataset may comprise unique images. In addition, an additional dataset with background images may be added to the training in order to reduce the number of false positives. For the training, it is also possible to use modified images, "synthetic data" in order to increase the number of objects, if the number of occurrences or instances of an object is limited.

As a next step, 130, the trained model is used for detecting objects from video streams obtained by the video cameras. With the present application, the video streams from the video cameras are non-altered, with no compression and with no pre-processing, which is an important advantage for reducing or eliminating delays. Inference using a trained model may be performed either on saved images or videos or on-line from the video cameras. Inference on already annotated images may be done as a means of verifying the performance of a model on actual objects. Apart from detecting objects, the method also utilizes an estimation of the probability or confidence that an object is to be regarded as a detectable object. This is expressed as a confidence value in the range between zero and one where a higher number indicates a higher confidence of the detected object. The detected objects are marked with annotation and confidence level, step 140.

During an inspection, the one or more video cameras may move along the component t that is inspected, obtaining video streams with a plurality of video frames. As an alternative, the fuel assembly may be moved. This means that several video frames will contain the same object. On the one hand, this means that the likelihood or probability of detecting the object is high when the model interprets the frames. On the other hand, there is a risk that the same object is detected several times and is annotated, which then can lead to a higher number of detected objects than the number of actual objects. In order to handle this, the method is provided with a tracking system, where every unique detection is followed in the video, step 150. Without such a tracking system, it would be very difficult to distinguish between different detections in all analysed video frames.

Further, during analysis of the video stream, all of the frames of the video stream or streams with the detected objects are analysed and put together in a separate video stream or a summary with marked detections that can be analysed by an authorized inspector, step 160.

The method also includes a feature wherein, if the model has been trained on more than one class, some classes may be omitted or turned off. The model finds all classes, but the turned off classes are not presented.

For the present application, a computer platform or computer setup 40 is provided for the training of the model. This platform comprises a plurality of stored images that are used as training images and the platform facilitates uploading of images to dataset, handling of dataset for annotation and training of models. The platform is designed to handle various image and data formats for annotation, training and inference. The platform may have an integrated annotation module for labelling of objects, as well as an automated annotation feature using existing models to improve labelling speed and efficiency.

The platform may include a training pipeline for training of models using the annotated datasets. As mentioned above, several different datasets may be included in the training of one model, depending on the application. A deep learning framework may be utilized for model training on-premise using dedicated graphics processing units (GPUs) in order to accelerate the process. Further, hyperparameters and augmentations may be added to the training process for optimizing the performance of the model. The outcome of a training session may be visualized on the display of the computer platform.

When the model of the computer platform has been trained, it can be used for inspection of for instance a fuel assembly in a nuclear reactor. The platform is connected to video cameras that are installed in the reactor fuel and service pool. The video cameras are activated and transmit video streams with plurality of video frames to the platform. The software comprising the model analyses all datasets in order to detect objects as described above. Regarding the video cameras, when inspecting a fuel assembly, it is possible and preferable to use video cameras that are already arranged in the fuel and service pool. Thus, for this type of inspection, no additional video cameras are necessary.

The computer platform may constitute any suitable computer that can execute the method described, which may be implemented by programmed instructions, typically constituted by one or several computer programs. The computer may take the form of substantially any suitable type of hardware or hardware/firmware device implemented using processing circuity such as, but not limited to, a processor, Central Processing Unit (CPU), a controller, an arithmetic logic unit (ALU), a digital signal processor, an Application Specific Integrated Circuit (ASIC), a circuit for digital signal processing (digital signal processor, DSP), a microcomputer, a field programmable gate array (FPGA), a System-on-Chip (SoC), a programmable logic unit, a microprocessor, an application-specific integrated circuit, or any other device capable of electronically performing operations in a defined manner, or other processing logic that may interpret and execute instructions. The herein utilised expression "computer" may represent a processing circuitry comprising a plurality of processing circuits, such as, e.g., any, some or all of the ones mentioned above. The computer is further provided with a display or monitor provided with a graphics circuitry.

Further, the computer may be connected to a memory unit, which may provide the computer with, for example, stored program code and/or stored data which the computer may need to enable it to execute the method. The computer may also be adapted to store partial or final results of the method in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

Even though the above example of the method and its use has been described in conjunction with inspection of a fuel assembly, the person skilled in the art will understand that it may be utilized for other types of components and equipment and other areas that need to be inspected. One such area where the method may be used for improving detection of flaws and defects is unloading of PWR (pressurized water reactor) assemblies. Since unloading of a PWR is very fast and since two or even four side-facing video cameras are used, it is almost impossible for an inspector to detect anomalies. The present method with a trained model could be used to detect objects very precisely and accurately. A test was performed by the applicant where a single face video camera was used with an unloading time of 25 seconds. In this case, even if the inspection speed was very high and the trained model used objects from a different environment, the model could accurately detect similar oxide patterns on the video stream from the unloading.

Thus, the present method may be utilized for inspection of a number of different areas. Other applicable areas may be inspections of debris filters for the finding of debris. In this case, the model may be trained with only one class with images of debris. A test was carried out by the applicant where the results from the inference of the inspection video show that the method is capable of clearly detecting debris. Of course, further classes may be added to the model so as to also separate oxide spalls from small threads, for instance. Further areas that can be applicable are fuel rods, pipes, valves, fittings for detecting presence of for instance corrosion.

The method according to the application may use different detection technologies. One is object detection as described above using rectangles and object classes.

Another detection technology is image segmentation. Segmentation may be used to mark and inspect certain areas on a component. This may for example be build-up of oxides, crud, corrosion etc. In this regard, it is to be understood that the word "object" as used throughout the description and the claims of the present application also includes areas that are used with image segmentation.

Training of a model that utilizes segmentation is similar to object training. Instead of rectangles, segmentation is trained with polygons where the objects, that can be areas instead of single objects, are marked with polygons, which allows marking of the area itself that is to be included in the training. Segmentation will be more processor intensive so analysing a video stream in real time is not the only option that will be used. In the same way as object detection, it is possible to analyse each frame in the video stream and use tracking systems and different classes and confidence values for each class.

This may cause a certain delay in the system so there might also be other approaches where analysis of images can be a way to solve a task, such as analysing images wherein the system is reporting a degree of coverage of the detected surface per image. It is also feasible to combine object detection and segmentation where at first an object in the image is detected, which then triggers an analysis map segmentation on this specific image, for example when an object is found in a streaming video with object detection and this frame is then sent into the model for segmentation. This method could be used on streaming video without causing delay. A third variant may be to use segmentation on all frames in a video stream and use the result to calculate an average coverage rate or extract the result at specific positions. This variant may cause a delay, but in most cases it may probably not be an obstacle when analysing objects such as crud and oxidation etc.

It is to be understood that the embodiment described above and shown in the drawings is to be regarded only as non-limiting examples that can be modified in many ways within the scope of the patent claims.

## Claims

1. A method for detecting classified objects on components in nuclear power plants, the method comprising the steps of:
- retrieving at least one video stream of frames containing images of a component, which at least one video stream is uncompressed and unaltered;
- analysing each frame of the retrieved at least one video stream with an image model built up of at least one type of classified object;
- marking in the at least one video stream all detected objects; and
- presenting the marked objects in a video stream or as a summary.

2. The method according to claim 1, wherein the image model is built up of plurality of components, the plurality of components being of both the same type and of different types.

3. The method according to any of the preceding claims, further comprising the step of
- setting a confidence level for each detected component.

4. Method according to any of the preceding claims, comprising the further step of
- collecting each frame comprising a detected and marked object, and
- presenting the collected frames as a seamless video stream or as a summary with images with all objects found in the retrieved video stream.

5. The method according to any of the preceding claims 3-4, further comprising the step of:
- labelling the marked objects with information regarding the type of object, and
- presenting the detected objects with label and confidence level.

6. The method according to claim 5 when dependent on claim 2, further comprising the step of:
- selecting which type of detected object to be presented in the video stream or the summary.

7. The method according to any of the preceding claims, further comprising the step of:
- tracking each detected object in order to prevent duplication of detection when a certain object appears in more than one video frame.

8. The method according to any of the preceding claims, wherein the image model is built up by training detection of known objects.

9. The method according to claim 8, wherein the model utilizes object detection technology.

10. The method according to claim 8 or 9, wherein the model utilizes image segmentation technology.

11. The method according to any of the preceding claims, wherein the components to be inspected comprise, fuel assemblies, filters, control rods, piping.

12. A computer platform comprising program instructions which, when the program is executed by the computer platform, causes the computer platform to carry out the method according to claims 1 - 11.

13. A computer-readable storage medium comprising program instructions which,
when executed by a computer platform, cause the computer platform to carry out the method according to claims 1 - 11.
